**Europäisches Patentamt**

**European Patent Office**

**Office européen des brevets**

(19)

(11) Numéro de publication: **0 197 842**

**A1**

(12) **DEMANDE DE BREVET EUROPEEN**

(21) Numéro de dépôt: **86400644.0**

(22) Date de dépôt: **26.03.86**

(51) Int. Cl.⁴: **G 02 B 6/42**

(30) Priorité: **29.03.85 FR 8504854**

(43) Date de publication de la demande:
**15.10.86 Bulletin 86/42**

(84) Etats contractants désignés:
**DE GB IT SE**

(71) Demandeur: **SOCAPEX**
**10 bis, quai Léon Blum**
**F-92153 Suresnes(FR)**

(72) Inventeur: **Laroulandie, Pierre-Jean**
**24, rue de Silly**
**F-92100 Boulogne Billancourt(FR)**

(72) Inventeur: **Lefevre, Jean-Pierre**
**Résidence Marcel Sembat 12, rue Edouard Vaillant**
**F-92800 Puteaux(FR)**

(72) Inventeur: **Malinge, Jean-Louis**
**10, rue Develly**
**F-92310 sevres(FR)**

(74) Mandataire: **Brullé, Jean et al,**
**Service Brevets Bendix 44, rue François 1er**
**F-75008 Paris(FR)**

(54) **Duplexeur optique miniaturisé à point optique déconnectable.**

(57) L'invention concerne un duplexeur optique miniaturisé qui peut être inséré dans l'une des alvéoles d'un connecteur de carte (52). Le duplexeur comprend un miroir semi-réfléchissant (22) qui sélectionne les chemins optiques des faisceaux émis par la diode électroluminescente (40) ou reçus par la photodiode (25) ainsi que des moyens de liaison optique (29, 30, 33) vers une fibre optique extérieure (62).

Application à des connecteurs mixtes optiques et électriques.

**EP 0 197 842 A1**

./...

Croydon Printing Company Ltd.

FIG_3

DUPLEXEUR OPTIQUE MINIATURISE A POINT
OPTIQUE DECONNECTABLE

La présente invention a pour objet un duplexeur optique, c'est-à-dire un composant d'interface électro-optique entre une fibre optique, une diode électroluminescente et une photodiode.

Un tel duplexeur assure d'une part le couplage entre un signal optique sortant émis par la diode électroluminescente et destiné à être véhiculé par la fibre, et d'autre part le couplage entre un signal optique entrant véhiculé par la même fibre optique et la photodiode.

Il peut être avantageusement monté dans un connecteur électrique connu en France sous la référence HE 1204, dans le connecteur type M de la DIN 41612 en Allemagne et type M de la recommandation GO3-2 de la CEI.

Le domaine de l'électro-optique a connu récemment un essor considérable et des applications multiples. Parmi ces applications, beaucoup de dispositifs associent sur un même support ou dans un même boîtier des circuits relevant du domaine de l'électronique à ceux relevant du domaine de l'optique. Ces dispositifs doivent donc disposer de liaisons électriques et de liaisons optiques avec l'extérieur. Celles-ci sont généralement assurées par des connecteurs électriques ou optiques selon les cas. Il a paru intéressant de réunir les fonctions de liaisons électroniques et optiques sur un seul connecteur. Cette solution est particulièrement intéressante lorsque le dispositif électro-optique comporte un nombre important de cartes enfichables. Les cartes peuvent alors être facilement retirées ou introduites en une seule opération. Il en résulte une économie de temps et également un gain de place sur les circuits.

Dans le cas de circuits utilisant des duplexeurs optiques, il est intéressant d'intégrer entièrement le duplexeur dans le connecteur et non seulement les connexions optiques proprement dites. Le problème qui se pose alors est celui de la miniaturisation du duplexeur. On connait un duplexeur optique qui peut être intégré dans un connecteur de carte.

Celui-ci est réalisé par sciage d'une extrémité de la fibre dans le sens de la longueur. Cette extrémité de la fibre comporte alors deux voies : l'une affectée à la photodiode et l'autre à la diode électroluminescente. L'encombrement de ce duplexeur est important et sa technologie relativement complexe à mettre en oeuvre.

Afin de pallier ces inconvénients, l'invention propose un duplexeur optique miniaturisé qui peut être inséré dans l'une des alvéoles intérieures d'un connecteur de carte. La fibre optique qui véhicule les signaux entrant et sortant est alors insérée par l'intermédiaire d'une fiche optique dans une alvéole du connecteur de fond de panier qui fait face au duplexeur. Le duplexeur ainsi que la fibre sont encliquetés dans les alvéoles et peuvent être démontés grâce à un outil approprié. Les fonctions principales du duplexeur, à savoir les chemins optiques empruntés par les signaux entrant et sortant, sont assurées par la présence d'un miroir semi-réfléchissant.

L'invention a donc pour objet un duplexeur optique comprenant dans un même boîtier, une diode électroluminescente destinée à émettre un faisceau lumineux vers une fibre optique extérieure et une photodiode destinée à recevoir un faisceau lumineux issu de la même fibre optique, le duplexeur comprenant également des moyens de transport desdits faisceaux lumineux suivant un même chemin optique et des moyens de sélection des faisceaux lumineux émis et reçus, caractérisé en ce que lesdits moyens de sélection des faisceaux lumineux sont constitués par un miroir semi-réfléchissant, le duplexeur comprenant des moyens destinés à assurer la liaison entre ledit chemin optique et la fibre optique extérieure par l'intermédiaire d'une fibre optique.

L'invention sera mieux comprise et d'autres avantages apparaîtront au moyen de la description qui va suivre et des figures annexées parmi lesquelles :

- la figure 1 est un schéma explicatif d'un premier mode de réalisation de l'invention,

- la figure 2 est un schéma explicatif d'un second mode de réalisation de l'invention,

- la figure 3 représente une version élaborée d'un duplexeur selon l'invention,

- la figure 4 est une vue en coupe montrant un détail du duplexeur selon l'invention,

- la figure 5 est un schéma explicatif du montage du duplexeur,

- la figure 6 représente une autre version d'un duplexeur selon l'invention,

- la figure 7 illustre le montage du duplexeur sur un connecteur et son raccordement.

Suivant le type de diode électroluminescente utilisée, deux modes de réalisation sont possibles sans que les cotes d'encombrement du duplexeur et de la fiche soient modifiées.

Un premier mode de réalisation de l'invention est applicable à un duplexeur comprenant une diode électroluminescente à faisceau focalisant et une photodiode possédant une surface sensible suffisante pour capter un faisceau divergent. Pratiquement, la diode électroluminescente aura une distance frontale supérieure ou égale à 1 mm et la photodiode sera une diode PIN de surface sensible supérieure ou égale à 7 mm$^2$ livrée dans un boîtier standard ou avec un surmoulage en plastique.

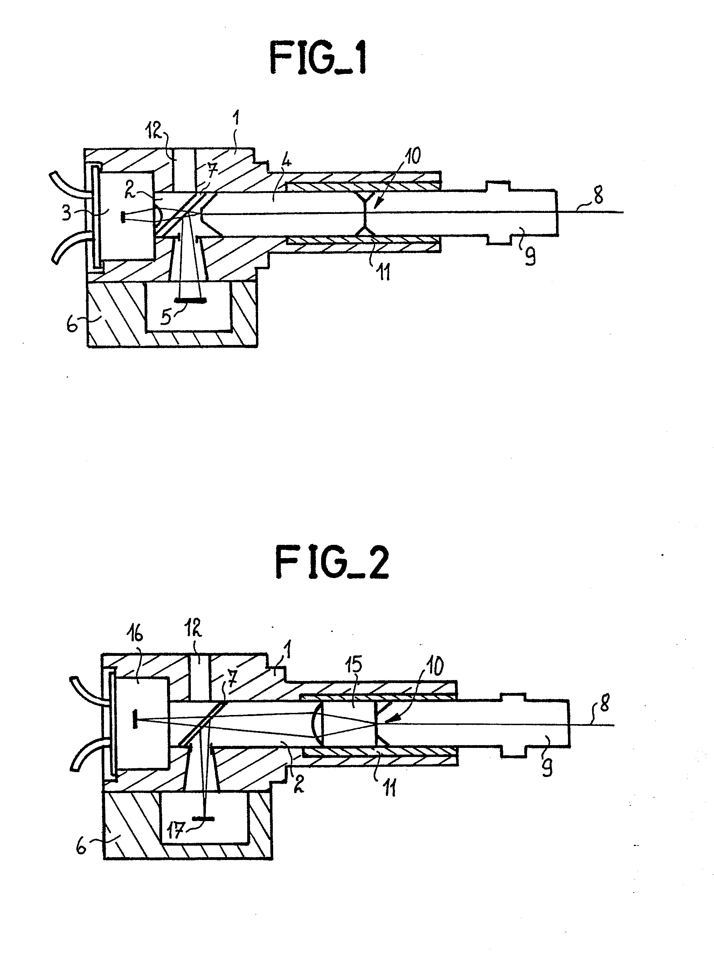

La figure 1 est un schéma explicatif du premier mode de réalisation selon l'invention. Le duplexeur comprend un corps 1 percé de part en part d'un trou 2. L'une des extrémités du trou 2 est aménagée de façon à recevoir une diode électroluminescente 3 à faisceau focalisant et centré sur l'axe du trou 2.

Un barreau 4 de forme générale cylindrique est disposé en face de la diode 3. Ce barreau comprend une fibre surmoulée centrée sur l'axe optique de la diode électroluminescente. Il est avantageux de choisir l'axe optique confondu avec l'axe du trou 3. La photodiode 5 est placée dans une direction perpendiculaire à l'axe optique ci-dessus défini comme étant la confusion de l'axe optique de la diode 3 et de l'axe de la fibre surmoulée. La diode 5, symboliquement représentée sur la figure 1 est recouverte d'un carter 6 fixé sur le corps 1. Un miroir semi-réfléchissant 7 est placé dans le trou 3, sur l'axe optique et est incliné à 45° par rapport à cet axe. Il est placé de façon à ce qu'un faisceau lumineux entrant dans le duplexeur, et véhiculé par la fibre surmoulée du barreau 4, soit renvoyé par le miroir 7 vers la photodiode 5. Par contre, un faisceau lumineux émis par la diode électroluminescente passe à travers le miroir 7 et se dirige vers la fibre surmoulée du barreau 4. La bonne qualité du transfert lumineux diode électroluminescente-fibre surmoulée est principalement déterminée par les positions relatives de la diode 3 et de la fibre l'une par rapport à l'autre. Un positionnement rigoureux peut être obtenu par micromanipulation de la diode 3. Cette manipulation est réalisée axialement.

Ce duplexeur est à point optique déconnectable, c'est-à-dire qu'il doit être raccordé à une fibre optique 8 qui véhicule les signaux entrant et sortant. La connexion optique est réalisée par l'intermédiaire d'une fiche optique dont l'embout 9 est représenté sur la figure et qui vient s'emboîter dans le corps 1 du duplexeur. La liaison optique existant entre la fibre 8, centrée dans l'embout 9, et la fibre surmoulée du barreau 4 doit être très précise. En effet, il peut y avoir des pertes importantes au niveau du plan optique portant la référence 10 si l'aboutement du barreau 4 et de l'embout 9 ne réalise pas la confusion des axes optiques.

Un organe de réalignement 11 peut être monté dans le corps 1. Son usinage aura été particulièrement soigné afin de permettre le bon alignement des axes optiques.

Des moyens peuvent être également prévus pour limiter la réjection du signal optique émis par la diode électroluminescente vers la photodiode. On peut, par exemple, prévoir un diaphragme sur le chemin optique qui mène du miroir 7 à la photodiode. Dans ce cas, l'ouverture du diaphragme est calculée pour transmettre correctement un signal optique entrant en direction de la photodiode. On peut également traiter la cavité interne du corps 1, située entre la diode 3 et le barreau 4 de façon à ce que la lumière parasite soit absorbée par les parois. On peut encore placer un absorbeur de lumière 12 en face de la photodiode 5.

Un second mode de réalisation de l'invention est applicable à un duplexeur comprenant une diode électroluminescente à faisceau pseudo-parallèle. Pratiquement, la photodiode sera une diode PIN de surface sensible supérieure ou égale à 0,5 mm$^2$ livrée dans un boîtier standard ou avec un surmoulage en plastique.

La figure 2 est un schéma explicatif du second mode de réalisation selon l'invention. Sur cette figure, les mêmes références qu'à la figure 1 représentent les mêmes éléments.

Le barreau avec fibre surmoulée de l'option décrite précédemment est remplacé ici par une lentille-barreau 15 sur laquelle est aboutée l'embout 9 de la fiche optique. Comme précédemment, la micromanipulation de la diode permet d'affiner avec précision le transfert de puissance lumineuse entre la diode 16 et la fibre optique 8. Pour le fonctionnement en émission de lumière, le faisceau optique émis par la diode 16 traverse le miroir 7 et est focalisé par la lentille-barreau 15 au point de connexion entre cette lentille et l'embout 9 de la fiche optique. Le signal optique sortant est alors véhiculé par la fibre optique 8. Un faisceau optique entrant est véhiculé par la fibre 8 jusqu'à la lentille-barreau 15 qui envoie un faisceau convergent vers le miroir semi-réfléchissant 7. Le faisceau, qui est toujours convergent, est alors renvoyé vers la photodiode 17.

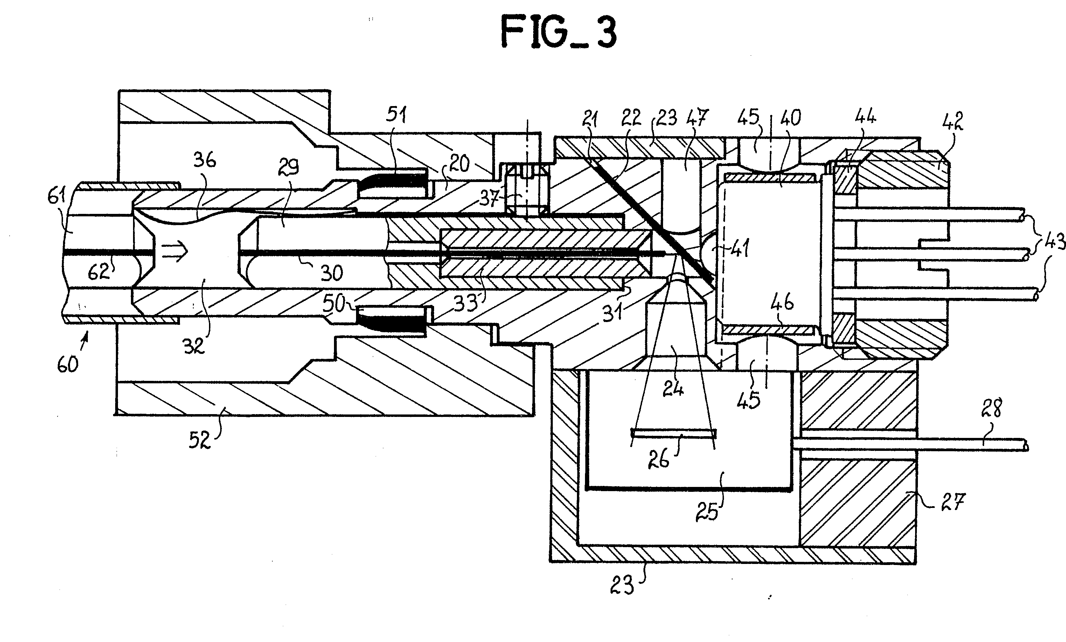

La figure 3 représente une version élaborée d'un duplexeur selon le premier mode de réalisation de l'invention. Le corps 20 est pourvu d'une fente 21 permettant d'introduire le miroir semi-réfléchissant 22. Le carter 23 est modifié par rapport aux figures précédentes de façon à enfermer une partie du corps 20. Cette transformation permet au carter de fermer la fente 21 et de retenir ainsi le miroir dans son logement. L'usinage du trou 24 a été réalisé de façon à disposer d'un diaphragme dans sa partie proche du miroir et à laisser un passage suffisant pour le faisceau divergent reflété par le miroir 22 en direction de la photodiode 25. La référence 26 représente symboliquement la surface sensible de la photodiode. La photodiode est fixée, par exemple par collage, sur le carter 23. Un bouchon 27, qui peut être également collé, assure la protection mécanique de la photodiode tout en permettant le passage des connexions 28 de la photodiode vers un circuit de traitement. Le barreau 29, dans lequel est surmoulée une fibre optique 30, arrive en butée sur un épaulement 31 du trou 32 pratiqué dans la plus grande longueur du corps 20. Le barreau 29 comprend un élément interne concentrique formé d'un cylindre percé 33. Le cylindre 33 ayant un diamètre inférieur au diamètre du barreau permet d'amener la fibre 30 le plus près possible du miroir 22. Le trou percé dans le cylindre 33 est d'un diamètre légèrement supérieur au diamètre de la fibre 30. Il est avantageux que ce trou soit évasé aux extrémités du cylindre afin de faciliter l'introduction de la fibre 30. Celle-ci peut alors sans problème être amenée à proximité immédiate du miroir 22. Pour assurer son positionnement on dépose un point de colle dans l'évasement terminal du cylindre 33.

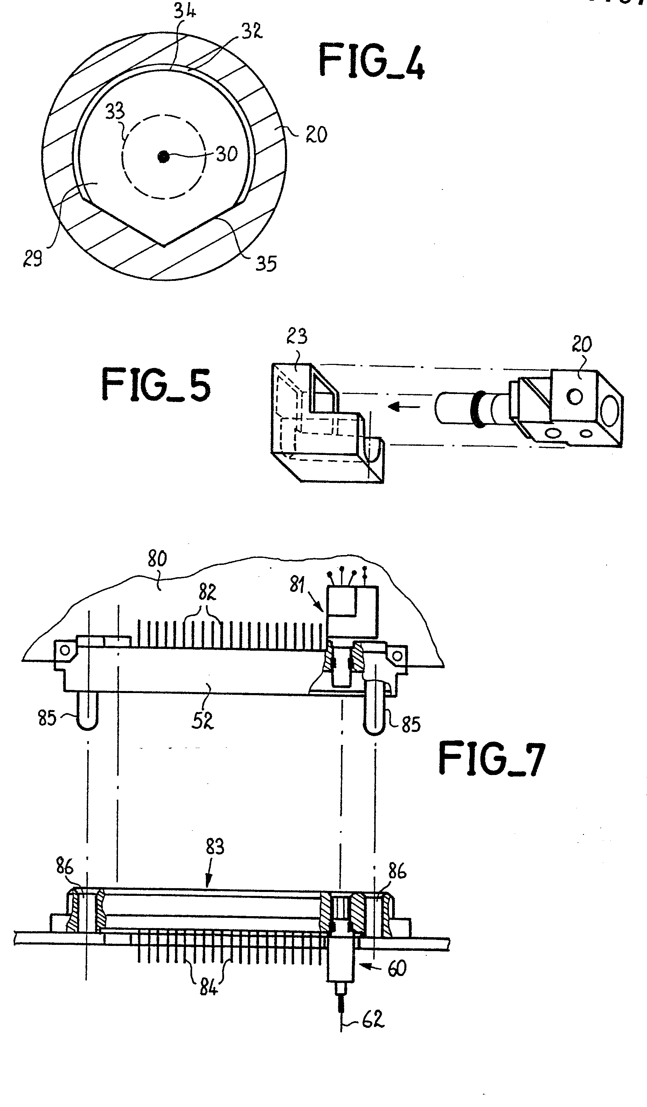

Pour disposer d'une bonne qualité d'alignement des axes optiques, il est avantageux que le barreau 29 et l'alésage du trou 32 disposent de formes en V complémentaires. La figure 4 montre l'extrémité présentée par le duplexeur vue du côté de la fiche optique. De ce côté, le corps présente une forme tubulaire. Le trou 32 qui perce le corps 20 de part en part présente, au moins dans la partie destinée à recevoir le barreau 29 et l'embout de la fiche optique, une section circulaire 34 tronquée par un V 35. Le barreau 29 ayant un diamètre légèrement inférieur au trou 32 mais une forme en V complémentaire de celle du trou 32, assure de cette manière un transfert de précision entre axes optiques le plus précis possible. Sur cette figure, la fibre optique 30 a été représentée ainsi, en pointillés, que le cylindre 33. La fibre 30 exige un centrage rigoureux à l'extrémité du barreau 29 qui viendra en contact avec l'embout de la fiche optique. Le barreau 29 est percé d'un trou d'un diamètre relativement grand par rapport au diamètre de la fibre 30. Par une technique de transfert de précision du type décrit plus haut (pièces à section en forme de V), la fibre 30 peut être centrée précisément. Un point de colle permet de conserver la précision du centrage.

Une fois le barreau installé dans son logement, comme indiqué à la figure 3, un ressort 36, fixé à l'intérieur du trou 32, plaque le barreau 29 au fond de la forme en V du corps 20 et l'immobilise. On peut, en plus du ressort et pour plus de sûreté, assurer une fixation du barreau au corps 20 par une vis 37.

La diode électroluminescente 40 représentée avec sa microlentille 41 est placée dans son logement. La face avant de la diode 40 prend appui sur le bord du trou 32 qui est de préférence évasé à ce niveau pour que la microlentille de la diode soit le plus près possible du miroir 22. La diode 40 est fixée dans le corps 20 par l'intermédiaire d'une vis creuse 42 qui permet le passage des connexions 43 que l'on a représentées à titre d'exemple au nombre de trois. Une rondelle 44 peut être placée entre la diode 40 et la vis 42 pour éviter la rotation de la diode lors du serrage. Il est avantageux de disposer dans le corps 20 de quatre trous 45 placés à 90° l'un de l'autre et qui serviront à la micromanipulation de la diode 40. On peut également monter sur cette diode une bague 46 de protection. Le serrage de la diode électroluminescente par la vis 42 est calibré ce qui permet, grâce à un outil simple de micromanipulation d'aligner dynamiquement la diode par rapport à la fibre 30.

Le miroir semi-réfléchissant 22 peut être réalisé en verre minéral et avoir une épaisseur d'environ 0,2 mm. Suivant le coefficient de transmission du miroir, on favorisera soit le signal optique sortant du duplexeur, soit le signal optique entrant. A titre d'exemple, un coefficient de transmission de 0,9 donnera une atténuation du signal optique sortant de 0,45 dB et une atténuation du signal optique entrant de 10 dB.

Le duplexeur de la figure 3 comprend des moyens pour absorber la lumière parasite et notamment un absorbeur de lumière 47 placé en vis-à-vis de la photodiode. Cet absorbeur peut être simplement constitué par un trou noirci si le corps 20 est métallique par exemple. Le corps 20 peut être choisi de couleur noire par nature (cas du plastique) ce qui permet d'absorber directement la lumière parasite.

La partie tubulaire du corps 20 peut être munie d'une gorge 50 destinée à recevoir un clip 51, ceci afin de pouvoir fixer de façon semi-permanente le duplexeur dans l'une des alvéoles d'un connecteur de carte 52.

L'assemblage des différents éléments constitutifs du duplexeur est réalisé comme suit. Le barreau 29, le cylindre 33 et la fibre optique 30 sont d'abord assemblés comme il a été dit plus haut. Cet assemblage est installé sur le corps 20 ainsi que le miroir 22 et la diode électroluminescente 40. Le positionnement de la diode 40 est effectué par micromanipulation dynamique jusqu'à obtenir un signal émis satisfaisant en sortie du barreau 29. La photodiode est montée dans le carter 23 par l'intermédiaire du bouchon collé 27. La photodiode ne nécessite pas d'alignement dynamique. Le corps et le carter ainsi équipés sont alors assemblés comme indiqué à la figure 5. Une fois assemblés, le corps et le carter sont fixés par collage. Ainsi, comme cela est visible sur la figure 3, le carter assure le masquage de la rainure et du trou 47 destiné à former l'absorbeur de lumière.

La figure 3 illustre aussi la manière dont la fiche optique est raccordée sur le duplexeur. Le duplexeur étant fixé sur le connecteur de carte 52, la fiche optique 60 vient s'enficher sur le duplexeur comme indiqué sur la figure. L'embout 61 de la fiche optique est poussé jusqu'à venir en contact avec le barreau 29. La fibre optique 30 doit assurer la liaison optique avec la fibre optique 62 de l'embout 61. Pour obtenir une bonne qualité d'alignement des fibres 30 et 62, l'embout 61 a une section identique à celle du barreau 29. Le ressort 36 sert également à maintenir l'embout au fond de son logement.

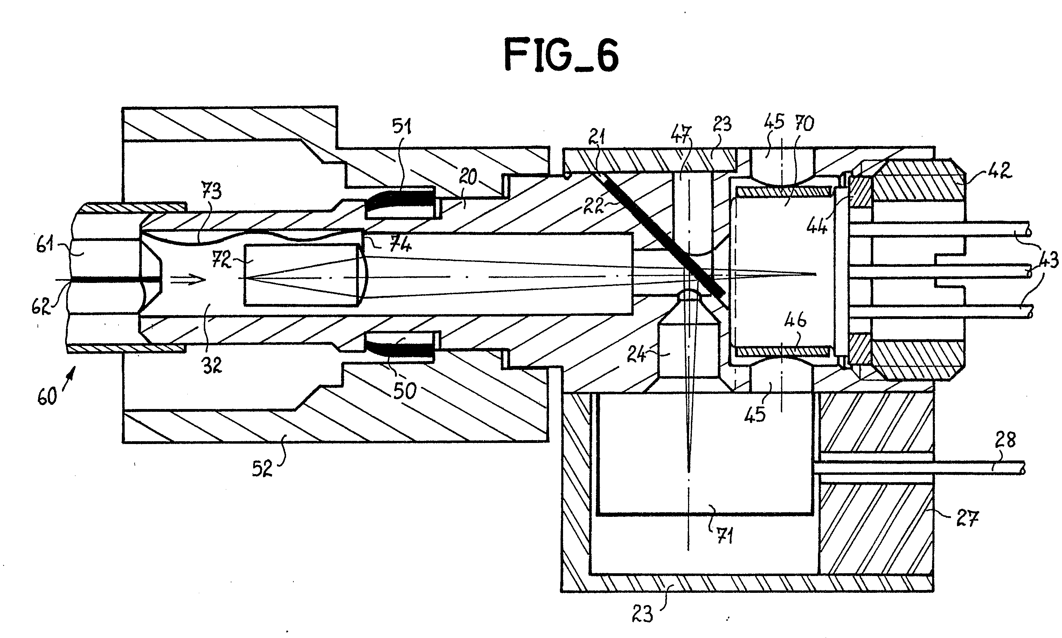

La figure 6 représente une version élaborée d'un duplexeur selon le deuxième mode de réalisation de l'invention. Dans cette figure, les mêmes références qu'à la figure 3 désignent les mêmes éléments. Suivant ce mode de réalisation, la diode électroluminescente 70 est· à faisceau pseudo-parallèle. La photodiode 71 peut être une diode PIN de surface sensible supérieure ou égale à 0,5 mm$^2$. Le transfert optique est dans ce cas assuré par la lentille-barreau 72. Celle-ci a une section circulaire et est maintenue dans la partie en V du corps 32 par le ressort 73 qui plaque également l'embout 61 dans la même partie. La lentille-barreau est arrêtée en translation. Cet arrêt peut être obtenu par la forme donnée au ressort qui comprend une patte d'arrêt (74) comme le montre la figure 6. L'installation des éléments constitutifs du duplexeur se fait de la même manière que précédemment.

La lentille-barreau 72, réalisée par exemple en polycarbonate assure deux fonctions. D'une part, elle permet la focalisation du signal optique émis par la diode électroluminescente 70 au point de connexion entre la fibre 62 et la lentille-barreau. D'autre part, elle permet le traitement du signal optique entrant vers la photodiode 71.

Quel que soit le mode de réalisation envisagé pour le duplexeur, celui-ci peut être monté très facilement dans un connecteur de carte de circuit imprimé. Ceci est dû aux dimensions réduites que l'on peut donner au duplexeur ce qui a été rendu possible grâce à la technologie particulière révélée par l'invention.

La figure 7 illustre le montage d'un duplexeur selon l'invention et son raccordement à une fiche optique. Le duplexeur optique, référencé 81, est sur cette figure, monté dans l'une des alvéoles intérieures du connecteur de carte 52. Le connecteur 52 est lui-même fixé sur une carte de circuit imprimé 80 et ses contacts 82 sont soudés sur ladite carte. Le connecteur 52 est destiné à être réuni au connecteur de fond de panier 83, les contacts 82 assurant la liaison électrique avec les contacts 84 du connecteur de fond de panier. Le connecteur de fond de panier 83 supporte la fiche optique 60 qui est insérée dans l'une de ses alvéoles intérieures et en vis-à-vis du duplexeur 81. Le pré-alignement duplexeur-fiche optique est assuré par deux guides 85 montés dans les alvéoles extérieures du connecteur de carte 52 et qui s'insèrent dans les deux alvéoles extérieures 86 du connecteur de fond de panier 83. L'alignement final est réalisé lors de la connexion du duplexeur et de la fiche optique. L'embout de la fiche optique est flottant ce qui permet de respecter une certaine sécurité d'enfichage.

D'autres duplexeurs optiques peuvent être placés sans problème sur le même connecteur de carte.

0197842

## R E V E N D I C A T I O N S

1. Duplexeur optique comprenant dans un même boîtier, une diode électroluminescente destinée à émettre un faisceau lumineux vers une fibre optique extérieure (8) et une photodiode destinée à recevoir un faisceau lumineux issu de la même fibre optique, le duplexeur comprenant également des moyens de transport desdits faisceaux lumineux suivant un même chemin optique et des moyens de sélection des faisceaux lumineux émis et reçus, caractérisé en ce que lesdits moyens de sélection des faisceaux lumineux sont constitués par un miroir semi-réfléchissant (7), le duplexeur comprenant des moyens destinés à assurer la liaison (10) entre ledit chemin optique et la fibre optique extérieure (8) par l'intermédiaire d'une fiche optique.

2. Duplexeur optique selon la revendication 1, caractérisé en ce que ledit boîtier est formé d'un corps (20) pourvu d'un évidement (32) destiné à recevoir les moyens de liaison et l'embout (61) de la fiche optique (60) à connecter, et d'un carter (23) de protection de l'une des diodes.

3. Duplexeur optique selon la revendication 2, caractérisé en ce que le corps (20) est pourvu d'une fente (21) destinée au logement du miroir semi-réfléchissant (22).

4. Duplexeur optique selon l'une des revendications 2 ou 3, caractérisé en ce que le corps (20) est pourvu d'un trou diaphragmé (24) sur le trajet optique allant du miroir (22) à la photodiode (25, 71).

5. Duplexeur optique selon l'une quelconque des revendications 1 à 4, caractérisé en ce que la diode électroluminescente (40, 70) est fixée sur le corps (20) par l'intermédiaire de la vis (42).

6. Duplexeur optique selon l'une quelconque des revendications 1 à 5, caractérisé en ce que des orifices (45) sont prévus sur le boîtier pour procéder à la micromanipulation de la diode électroluminescente (40, 70).

0197842

7. Duplexeur optique selon l'une quelconque des revendications 1 à 6, caractérisé en ce que la diode électroluminescente (40, 70) est munie d'une bague (46) servant à la protéger pendant l'opération de micromanipulation.

8. Duplexeur optique selon l'une quelconque des revendications 1 à 7, caractérisé en ce qu'il comprend un absorbeur (47) de la lumière parasite émanant de la diode électroluminescente (40, 70).

9. Duplexeur optique selon la revendication 8, caractérisé en ce que ledit absorbeur (47) est constitué par un trou pratiqué dans le corps (20) et bouché par le carter (23).

10. Duplexeur optique selon l'une quelconque des revendications 1 à 9, caractérisé en ce que le corps (20) est pourvu d'une gorge (50) destinée à recevoir un clip (51) permettant la fixation du duplexeur sur un connecteur de carte (52).

11. Duplexeur optique selon l'une quelconque des revendications 1 à 10, caractérisé en ce qu'il comporte des moyens de réalignement (11) du chemin optique et de la fibre optique extérieure (8).

12. Duplexeur optique selon la revendication 11, caractérisé en ce que lesdits moyens de réalignement sont constitués par la section dudit évidement (32) qui comprend une partie en forme de V (35).

13. Duplexeur optique selon l'une des revendications 11 ou 12, caractérisé en ce que les moyens de réalignement comprennent un ressort (36, 73) destiné à maintenir en position l'embout (61) de la fiche optique (60) et les moyens de liaison optique.

14. Duplexeur optique selon l'une quelconque des revendications 1 à 13, caractérisé en ce que les moyens de liaison optique sont constitués par un barreau (29) renfermant une fibre optique de liaison (30).

15. Duplexeur optique selon la revendication 14, caractérisé en ce que la fibre optique de liaison (30) est surmoulée à l'extrémité du barreau (29) opposée au miroir (22).

16. Duplexeur optique selon l'une des revendications 14 ou 15, caractérisé en ce que le barreau (29) comporte du côté du miroir un prolongement (33) de section réduite.

17. Duplexeur optique selon l'une quelconque des revendications 14 à 16, caractérisé en ce que le corps (20) supporte une vis de serrage (37) permetant l'immobilisation du barreau (29) dans l'évidement (32).

18. Duplexeur optique selon l'une quelconque des revendications 1 à 13, caractérisé en ce que les moyens de liaison optique sont constitués par une lentille-barreau (72).

19. Duplexeur optique selon la revendication 18, caractérisé en ce que ledit ressort (73) comprend une patte (74) d'arrêt en translation de la lentille-barreau (72).

# FIG_1

# FIG_2

# FIG_3

0197842

0197842

FIG_4

FIG_5

FIG_7

# FIG_6

Office européen
des brevets

**RAPPORT DE RECHERCHE EUROPEENNE**

**0197842**
Numéro de la demande

EP 86 40 0644

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 536 546 (AETNA TELECOMMUNICATIONS LABORATORIES) * Page 4, lignes 5-30; page 5, ligne 14 - page 7, ligne 5; figures 1a,b * | 1,2,8, 9,12 | G 02 B 6/42 |
| A | US-A-4 423 922 (D.R. PORTER) * Colonne 2, ligne 61 - colonne 3, ligne 44; colonne 4, ligne 62 - colonne 6, ligne 8; figures * | 1,3,11 ,14-16 | |
| A | FR-A-2 538 127 (SOCAPEX) * Page 11, ligne 25 - page 13, ligne 11; figures 4a,b,5,6a,b * | 11-15, 18,19 | |
| A | PATENTS ABSTRACTS OF JAPAN, vol. 8, no. 51 (P-259)[1488], 8 mars 1984; & JP - A - 58 202 423 (FUJITSU K.K.) 25-11-1983 * Abrégé * | 1-3 | **DOMAINES TECHNIQUES RECHERCHES (Int. Cl.4)** G 02 B |
| A | IBM TECHNICAL DISCLOSURE BULLETIN, vol. 22, no. 12, mai 1980, page 5288, New York, US; W.B. ARCHEY et al.: "Low loss optical coupler" * En entier * | 1 | |

Le présent rapport de recherche a été établi pour toutes les revendications

| Lieu de la recherche | Date d'achèvement de la recherche | Examinateur |
|---|---|---|
| LA HAYE | 07-07-1986 | MORRELL D.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03 82